# EUROPEAN PATENT APPLICATION

(11) **EP 4 628 882 A1**
(43) Date of publication of application: **08.10.2025**
(21) Application number: 23910829.3
(22) Date of filing: 28.12.2023
(51) Int. Cl.: G01N 23/20

(54) **ARTICLE SECURITY INSPECTION SYSTEM AND METHOD**

(30) Priority: 30.12.2022 CN 202211742812
(71) Applicant: NUCTECH COMPANY LIMITED, Beijing 100084 (CN); Tsinghua University, Haidian District, Beijing 100084 (CN)
(72) Inventor: ZHANG, Li, Beijing 100084 (CN); CHEN, Zhiqiang, Beijing 100084 (CN); LI, Yuanjing, Beijing 100084 (CN); JIN, Xin, Beijing 100084 (CN); CHANG, Ming, Beijing 100084 (CN); HUANG, Qingping, Beijing 100084 (CN); SUN, Yunda, Beijing 100084 (CN); ZHANG, Liguo, Beijing 100084 (CN); FENG, Bo, Beijing 100084 (CN); XU, Xiaofei, Beijing 100084 (CN); SHEN, Le, Beijing 100084 (CN)
(74) Representative: Winter, Brandl - Partnerschaft mbB
(86) International application number: PCT/CN2023/142758
(87) International publication number: WO 2024/140913

(57) **Abstract**

An item security inspection system and method applicable in the technical field of security inspection are provided. The item security inspection system (100, 200, 300) includes: at least one first detection device (101) configured to detect an item (111) and generate a first detection result; a first determination device (102) configured to generate a first determination result including a first safe result and a first non-safe result according to the first detection result; at least one second detection device (103) configured to detect an item (111) of which the first determination result is the first non-safe result and generate a second detection result; a second determination device (104) configured to generate a second determination result comprising a second safe result and a second non-safe result based on at least the second detection result; and a manual security inspection section (105) configured to perform manual security inspection on at least an item (111) of which the second determination result is the second non-safe result.

## Description

### CROSS REFERENCE TO RELATED APPLICATION(S)

This application claims priority to Chinese Patent Application No. 202211742812.4 filed on December 30, 2022, the disclosure of which is hereby incorporated in its entirety by reference.

### TECHNICAL FIELD

Embodiments of the present disclosure generally relate to a technical field of security inspection, and in particular, relate to an item security inspection system and method.

### BACKGROUND

With the development of economy, during population movement, security inspection on passenger luggage items are necessary at places with high population flow, such as subway stations and railway stations, so as to reduce the possibility of safety incidents in public areas, transportation facilities and other places.

### SUMMARY

According to a first aspect of the present disclosure, there is provided an item security inspection system. The system includes: at least one first detection device configured to detect an item and generate a first detection result; a first determination device configured to generate a first determination result including a first safe result and a first non-safe result based on the first detection result; at least one second detection device configured to detect an item of which the first determination result is the first non-safe result and generate a second detection result; a second determination device configured to generate a second determination result including a second safe result and a second non-safe result based on at least the second detection result; and a manual security inspection section configured to perform manual security inspection on at least an item of which the second determination result is the second non-safe result.

In some exemplary embodiments of the present disclosure, the first non-safe result includes a suspected dangerous result, a dangerous result and an undetermined result, the second detection device is further configured to detect an item of which the first determination result is either the suspected dangerous result or the undetermined result, so as to generate the second detection result, and the manual security inspection section is further configured to perform manual security inspection on an item of which the first determination result is the dangerous result.

In some exemplary embodiments of the present disclosure, the first non-safe result includes a suspected dangerous result, a dangerous result and an undetermined result, and the second detection device is further configured to detect an item of which the first determination result is any one of the suspected dangerous result, the dangerous result or the undetermined result, so as to generate the second detection result.

In some exemplary embodiments of the present disclosure, the second non-safe result includes a dangerous result, a suspected dangerous result and an undetermined result.

In some exemplary embodiments of the present disclosure, the second determination device is further configured to generate the second determination result based on the first detection result and the second detection result.

In some exemplary embodiments of the present disclosure, the first determination device is configured to: determine a first composition information indicating a composition of the item based on the first detection result; and generate the first determination result based on at least the first composition information.

In some exemplary embodiments of the present disclosure, the first determination device is further configured to: determine an image of the item based on the first detection result; and generate the first determination result based on both the first composition information and the image.

In some exemplary embodiments of the present disclosure, the second determination device is configured to: determine a second composition information indicating the composition of the item based on the second detection result; and generate the second determination result based on at least the second composition information.

In some exemplary embodiments of the present disclosure, the second determination device is further configured to: generate the second determination result based on a comparison result between the first composition information determined based on the first detection result and the second composition information.

In some exemplary embodiments of the present disclosure, the second determination device is further configured to: generate a dangerous result if the comparison result shows that the first composition information is identical to the second composition information and the second composition information indicates a presence of dangerous components; generate a suspected dangerous result or an undetermined result if the comparison result shows that the first composition information is different from the second composition information and the second composition information indicates a presence of dangerous components; and generate the second safe result if the comparison result shows that the first composition information is different from the second composition information and the second composition information indicates a presence of a safe composition.

In some exemplary embodiments of the present disclosure, the first detection result includes X-ray transmission data of the item, and the second detection result includes X-ray diffraction data of the item.

In some exemplary embodiments of the present disclosure, the first detection device includes a CT detection device and the second detection device includes an XRD detection device.

In some exemplary embodiments of the present disclosure, the item security inspection system further includes: a baggage retrieval region arranged on a downstream side of the first determination device and/or the second determination device, where the item is transferred to the baggage retrieval region when the first determination result of the item or the second determination result of the item is a safe result.

In some exemplary embodiments of the present disclosure, the item security inspection system further includes: a first diversion device configured to selectively divert the item to the second detection device, the manual security inspection section or the baggage retrieval region based on the first determination result; and a second diversion device configured to selectively divert the item to the manual security inspection section or the baggage retrieval region based on the second determination result.

In some exemplary embodiments of the present disclosure, the manual security inspection section is arranged on a downstream side of the first determination device and/or a downstream side of the second determination device.

In some exemplary embodiments of the present disclosure, the first determination device is arranged on a downstream side of the at least one first detection device, the at least one second detection device is arranged on a downstream side of the first determination device, and the second determination device is arranged on a downstream side of the second detection device.

In some exemplary embodiments of the present disclosure, the item security inspection system further includes a conveying device configured to at least selectively convey the item through the first detection device and the second detection device.

According to a second aspect of the present disclosure, an item security inspection method is provided. The method includes: detecting, by a first detection device, an item to generate a first detection result; generating a first determination result including a first safe result and a first non-safe result based on the first detection result; detecting, by a second detection device, an item of which the first determination result is the first non-safe result to generate a second detection result; generating a second determination result including a second safe result and a second non-safe result based on at least the second detection result; and performing manual security inspection on at least an item of which the second determination result is the second non-safe result.

**In** some exemplary embodiments of the present disclosure, the first non-safe result includes a suspected dangerous result, a dangerous result and an undetermined result, where detecting the item of which the first determination result as the first non-safe result to generate the second detection result includes: detecting an item of which the first determination result is either the suspected dangerous result or the undetermined result to generate the second detection result, and the item security inspection method further includes performing manual security inspection on an item of which the first determination result is the dangerous result.

**In** some exemplary embodiments of the present disclosure, the first non-safe result includes a suspected dangerous result, a dangerous result and an undetermined result, where detecting the item of which the first determination result is the first non-safe result to generate the second detection result includes: detecting an item of which the first determination result is any one of the suspected dangerous result, the dangerous result or the undetermined result, so as to generate the second detection result.

**In** some exemplary embodiments of the present disclosure, the second non-safe result includes a dangerous result, a suspected dangerous result and an undetermined result.

**In** some exemplary embodiments of the present disclosure, generating the second determination result based on at least the second detection result includes: generating the second determination result based on the first detection result and the second detection result.

**In** some exemplary embodiments of the present disclosure, generating the first determination result based on the first detection result includes: determining a first composition information indicating a composition of the item based on the first detection result; and generating the first determination result based on at least the first composition information.

**In** some exemplary embodiments of the present disclosure, generating the first determination result based on at least the first composition information includes: determining an image of the item based on the first detection result; and generating the first determination result based on both the first composition information and the image.

In some exemplary embodiments of the present disclosure, generating the second determination result based on at least the second detection result includes: determining a second composition information indicating the composition of the item based on the second detection result; and generating the second determination result based on at least the second composition information.

In some exemplary embodiments of the present disclosure, generating the second determination result based on at least the second composition information includes: generating the second determination result based on a comparison result between the first composition information determined based on the first detection result and the second composition information.

In some exemplary embodiments of the present disclosure, generating the second determination result based on the comparison result between the first composition information determined based on the first detection result and the second composition information includes: generating the dangerous result if the comparison result shows that the first composition information is identical to the second composition information and the second composition information indicates a presence of dangerous components; generating the suspected dangerous result or an undetermined result if the comparison result shows that the first composition information is different from the second composition information and the second composition information indicates a presence of dangerous components; and generating the second safe result if the comparison result shows that the first composition information is different from the second composition information and the second composition information indicates a presence of a safe composition.

In some exemplary embodiments of the present disclosure, the item security inspection method further includes: conveying the item to a baggage retrieval region when the first determination result or the second determination result is a safe result.

In some exemplary embodiments of the present disclosure, the item security inspection method further includes: selectively diverting the item to the second detection device, a manual security inspection section for performing manual security inspection or the baggage retrieval region based on the first determination result; and selectively diverting the item to the manual security inspection section or the baggage retrieval region based on the second determination result.

In some exemplary embodiments of the present disclosure, the item security inspection method further includes: at least selectively conveying, by a conveying device, the item through the first detection device and the second detection device.

According to the embodiments of the present disclosure, at least one first detection device and a first determination device are provided for detecting the item and generating a first determination result, so that the safety of the item may effectively analyzed. By providing the at least one second detection device and the second determination device, a secondary detection is performed on an item with the first non-safe result, so that the accuracy of item detection may be improved. By providing the manual security inspection section, manual security inspection is performed on an item with the second non-safe result, so that the efficiency of security inspection may be effectively improved.

### BRIEF DESCRIPTION OF THE DRAWINGS

The above and other objectives, features and advantages of the present disclosure will be more apparent from the following description of embodiments of the present disclosure with reference to the accompanying drawings, in which:
FIG. 1A schematically shows a structural diagram of an item security inspection system according to an embodiment;
FIG. 1B schematically shows a structural mounting diagram of the item security inspection system in the embodiment of FIG. 1A;
FIG. 2A schematically shows a structural diagram of an item security inspection system according to another embodiment;
FIG. 2B schematically shows a structural mounting diagram of the item security inspection system in the embodiment of FIG. 2A;
FIG. 3A schematically shows a structural diagram of an item security inspection system according to yet another embodiment;
FIG. 3B schematically shows a structural mounting diagram of the item security inspection system in the embodiment of FIG. 3A;
FIG. 4 schematically shows a flowchart of an item security inspection method according to an embodiment of the present disclosure;
FIG. 5A schematically shows a flowchart of operation S430 in an item security inspection method according to an embodiment of the present disclosure;
FIG. 5B schematically shows a flowchart of an item security inspection method according to another embodiment of the present disclosure;
FIG. 5C schematically shows a flowchart of operation S430 in an item security inspection method according to another embodiment of the present disclosure;
FIG. 6 schematically shows a flowchart of operation S420 in an item security inspection method according to an embodiment of the present disclosure;
FIG. 7 schematically shows a flowchart of operation S422 in an item security inspection method according to an embodiment of the present disclosure;
FIG. 8 schematically shows a flowchart of operation S440 in an item security inspection method according to an embodiment of the present disclosure;
FIG. 9 schematically shows a flowchart of operation S442 in an item security inspection method according to an embodiment of the present disclosure;
FIG. 10 schematically shows a flowchart of operation S4421 in an item security inspection method according to an embodiment of the present disclosure; and
FIG. 11 schematically shows a block diagram of an electronic device applicable for realizing part of operations of an item security inspection method according to an embodiment of the present disclosure.

### DETAILED DESCRIPTION OF EMBODIMENTS

Hereinafter, the embodiments of the present disclosure will be described with reference to the drawings. However, it should be understood that these descriptions are only exemplary and are not intended to limit the scope of the present disclosure. In the following detailed description, for the convenience of explanation, numerous specific details are set forth to provide a comprehensive understanding of the embodiments of the present disclosure. It may be evident, however, that one or more embodiments may be implemented without these specific details. Furthermore, in the following description, illustrations of well-known structures and technologies are omitted to avoid unnecessarily confusing the concepts of the present disclosure.

The terms used herein are for the purpose of describing specific embodiments only and are not intended to limit the present disclosure. The terms "comprising", "including" and the like used herein indicate the presence of the stated features, steps, operations and/or components, but do not exclude the presence or addition of one or more other features, steps, operations or components.

All terms (including technical and scientific terms) used herein have the meanings commonly understood by those skilled in the art unless otherwise defined. It should be noted that the terms used here should be interpreted as having meanings consistent with the context of the present specification, and should not be interpreted in an idealized or overly rigid way.

In the case of using an expression similar to "at least one of A, B and C", it should generally be interpreted according to the meaning of the expression commonly understood by those skilled in the art (for example, "a system having at least one of A, B and C" should include, but not be limited to, a system having only A, only B, only C, A and B, A and C, B and C, and/or A, B and C).

Usually, the solution adopted for the security inspection of passenger luggage item is to pass the luggage item through an X-ray transmission apparatus for X-ray transmission inspection. Safe luggage items are released, while luggage items determined to be unsafe or unable to be determined whether safe or not is conveyed to a baggage unpacking room for manual unpacking inspection. In this solution, the misdetermination rate of luggage items is high, which may cause more luggage items to be transferred to the baggage unpacking room for manual unpacking inspection, thereby reducing the efficiency of security inspection. In order to solve the problem that safety of an item may not be effectively identified through a single detection process and the security inspection efficiency is low in the related art, embodiments of the present disclosure provide an item security inspection system and method, which may permit a plurality of inspections of the item, thereby improving the item inspection accuracy as well as the security inspection efficiency. In the overall concept of the present disclosure, the item security inspection system includes: at least one first detection device configured to detect an item and generate a first detection result; a first determination device configured to generate a first determination result including a first safe result and a first non-safe result based on the first detection result; at least one second detection device configured to detect an item of which the first determination result is the first non-safe result and generate a second detection result; a second determination device configured to generate a second determination result including a second safe result and a second non-safe result based on at least the second detection result; and a manual security inspection section configured to perform manual security inspection on at least an item of which the second determination result is the second non-safe result.

According to the embodiments of the present disclosure, the at least one first detection device and the first determination device are provided for detecting the item and generating a first determination result, so that the safety of the item may effectively analyzed. By providing the at least one second detection device and the second determination device, a secondary detection is performed on an item with the first non-safe result, so that the accuracy of item detection may be improved. By providing at least two grades of security devices, the misdetermination rate of items may be effectively reduced, and more luggage items may be prevented from being misdeterminated and conveyed to the baggage unpacking room for manual inspection. By providing the manual security inspection section, manual security inspection is performed on an item with the second non-safe result, so that the efficiency of security inspection may be further effectively improved.

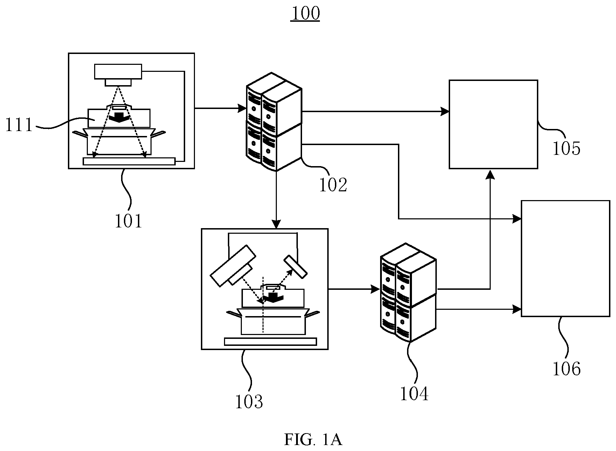

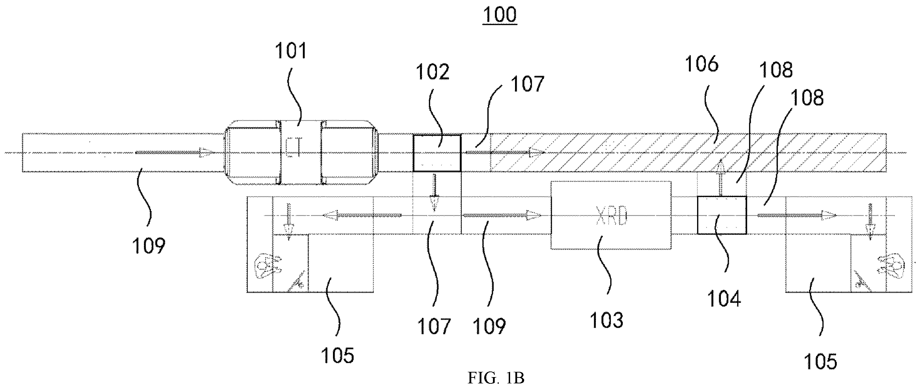

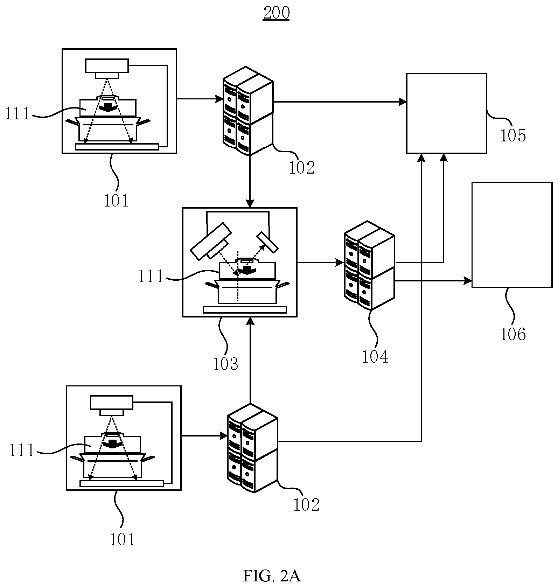

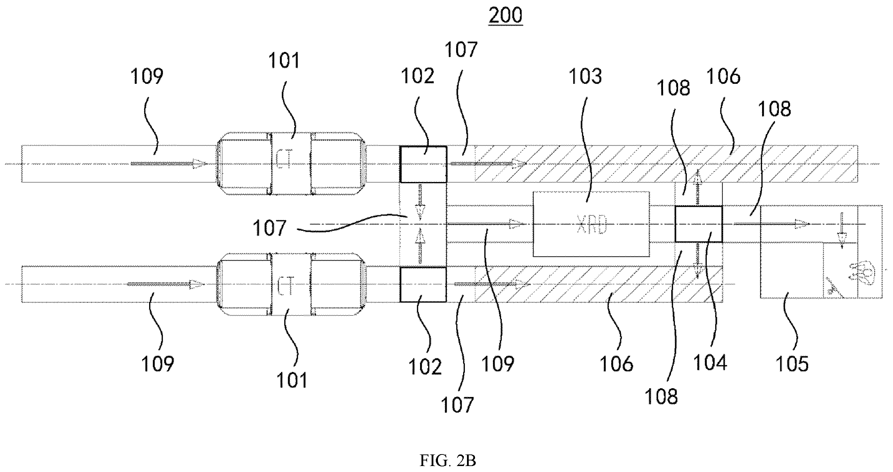

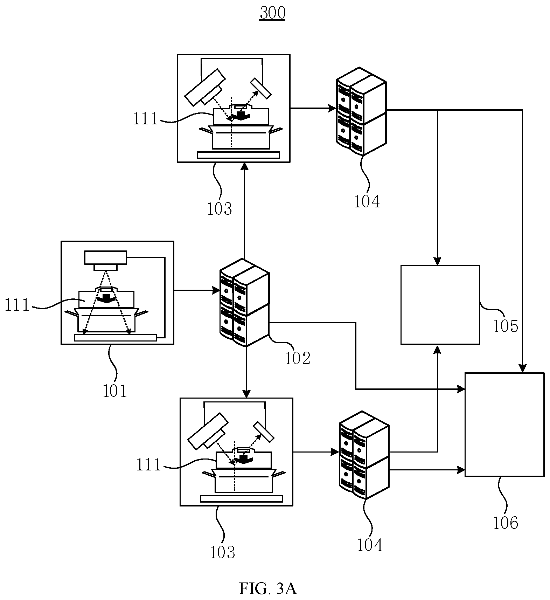

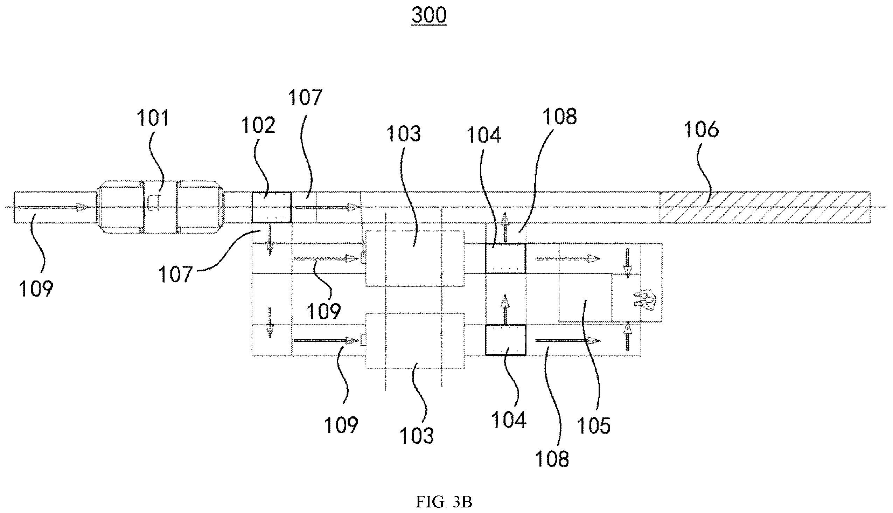

FIG. 1A schematically shows a structural diagram of an item security inspection system according to an embodiment. FIG. 1B schematically shows a structural mounting diagram of the item security inspection system in the embodiment of FIG. 1A. FIG. 2A schematically shows a structural diagram of an item security inspection system according to another embodiment. FIG. 2B schematically shows a structural mounting diagram of the item security inspection system in the embodiment of FIG. 2A. FIG. 3A schematically shows a structural diagram of an item security inspection system according to yet another embodiment. FIG. 3B schematically shows a structural mounting diagram of the item security inspection system in the embodiment of FIG. 3A.

FIG. 1A, FIG. 2A and FIG. 3A are respectively schematic diagrams of item security inspection systems 100, 200 and 300. The structure of the item security inspection system according to the embodiments of the present disclosure will be described below in detail with reference to FIG. 1A to FIG. 3B.

In the embodiments of the present disclosure, as shown in FIG. 1A to FIG. 3B, the item security inspection system may include at least one first detection device 101, a first determination device 102, at least one second detection device 103, a second determination device 104 and a manual security inspection section 105. In some embodiments, the item security system may further include a baggage retrieval region 106, which will be repeated below.

The first determination device 102 is arranged on a downstream side of the first detection device 101, the second detection device 103 is arranged on a downstream side of the first determination device 102, and the second determination device 104 is arranged on a downstream side of the second detection device 103.

The manual security inspection section 105 is arranged on the downstream side of the first determination device 102 and/or the downstream side of the second determination device 104. Exemplarily, a plurality of manual security inspection sections 105 may be provided, which are respectively arranged on the downstream side of the first determination device 102 or the downstream side of the second determination device 104. In other embodiments, the manual security inspection section 105 may be arranged on the downstream side of the second determination device 104, i.e., on the downstream side of each of the first determination device 102 and the second determination device 104.

The baggage retrieval region 106 is arranged on the downstream side of the first determination device 102 and/or the downstream side of the second determination device 104. Exemplarily, a plurality of baggage retrieval regions 106 may be provided, which are respectively arranged on the downstream side of the first determination device 102 or the downstream side of the second determination device 104. In other embodiments, the baggage retrieval region 106 may be arranged on the downstream side of the second determination device 104, i.e., on the downstream side of each of the first determination device 102 and the second determination device 104.

For example, the baggage retrieval region is a region that has a specific length and may accommodate a certain number of items. After an item passes the security inspection, the item is conveyed to the baggage retrieval region, where the item owner may pick up the item that has passed the security inspection.

The item 111 may be an item that needs to be subject to security inspection in various places, including but not limited to a luggage item. The item 111 is conveyed to the first detection device 101 and the second detection device 102 for corresponding detection.

The first detection device 101 is configured to detect an item 111 and generate a first detection result. For example, when the item 111 is moved inside the first detection device 101, the item is detected to generate a first detection result.

As an example, the first detection result may include X-ray transmission data of the item, for example, image information, composition information and the like of the item may be obtained from the X-ray transmission data of the item.

The first detection device 101 includes, for example, a CT detection device, which may detect an item, generate information such as a transmission image of the item. It is further determined whether there are safe or non-safe items in the detected items from the transmission images and other information through manual analysis or analysis apparatus, so that the safe items are transferred to the baggage retrieval region, and another detection process is performed on the non-safe items.

The first determination device 102 is configured to generate a first determination result including a first safe result and a first non-safe result based on the first detection result. The first determination device 102 may be, for example, a device that automatically performs determination based on the first detection result, or a device that performs determination based on the first detection result manually.

For example, the first safe result may indicate that the detected item is safe and does not contain dangerous goods, and the item of which the first determination result is the first safe result may be transferred to the baggage retrieval region. The first non-safe result may indicate that the item contains dangerous goods, or there may be dangerous goods in the item, or whether the item is safe is unable to be determined. Accordingly, the first non-safe result includes a dangerous result, a suspected dangerous result and an undetermined result.

Exemplarily, the suspected dangerous result may be, for example, a situation that there may be dangerous goods inside the detected item. The dangerous result may be a situation that there must be dangerous goods inside the detected item. The undetermined result may be a situation that it is unable to determine whether there are dangerous goods inside the detected item, or there are unknown items in the detected item.

The second detection device 103 is configured to detect an item of which the first determination result is a first non-safe result and generate a second detection result. When the first determination device 102 performs determination based on the first detection result generated by the first detection device and generates the first non-safe result, the second detection device 103 detects the item 111 of which the first determination result is the first non-safe result, so as to further determine whether the item 111 is safe. The second detection device may make up for the deficiency of the first detection device, thereby improving the detection accuracy.

As an example, the second detection result includes X-ray diffraction data of the item. For example, as composition information of the item may be obtained based on the X-ray diffraction data of the item, so as to determine whether the detected item is safe.

The second detection device 103 may include an XRD detection device. The XRD detection device detects the item and may generate information such as the diffraction pattern of the item, and the specific composition information of the detected item may be determined from the diffraction pattern through manual analysis or an analysis apparatus, and it is determined whether the detected item is safe based on the composition information, so that the accuracy of item detection may be improved.

The second determination device 104 is configured to generate a second determination result including a second safe result and a second non-safe result based on at least the second detection result.

For example, the second determination device 104 may generate the second determination result based on only the second detection result. For another example, the second determination device 104 may generate the second determination result based on both the first detection result and the second detection result.

For example, the second safe result may indicate that the detected item is safe and does not contain dangerous goods, and the item of which the second determination result is the second safe result may be transferred to the baggage retrieval region. The second non-safe result may indicate that the item contains dangerous goods, or there may be dangerous goods, or it is unable to determine whether the item is safe. Accordingly, the second non-safe result includes a dangerous result, a suspected dangerous result and an undetermined result.

The manual security inspection section 105 is configured to perform a manual security inspection on at least the item of which the second determination result is the second non-safe result. The manual security inspection section 105 may be, for example, a baggage unpacking room. The item of which the determination result is the second non-safe result is moved to the manual security inspection section (for example, the baggage unpacking room) for manual unpacking inspection.

For example, the manual security inspection section 105 performs the manual security inspection only on an item of which the second determination result is the second non-safe result. For another example, the manual security inspection section 105 may perform manual security inspection on an item of which the first determination result is the first non-safe result.

In some exemplary embodiments of the present disclosure, when the first determination result or the second determination result is the safe result, the item is transferred to the baggage retrieval region 106.

For example, when the first determination result is the safe result, the item is transferred to the baggage retrieval region 106. For another example, when the second determination result is the safe result, the item is transferred to the baggage retrieval region 106. The owner or holder of the item may pick up the corresponding item in the baggage retrieval region.

In the embodiments of the present disclosure, as shown in FIG. 1A to FIG. 3B, one or more first detection devices 101 and second detection devices 103 may be provided to meet the requirements of different scenarios.

In some embodiments, the first detection device 101 may be a CT detection device, which may generate a transmission image of an item and is applicable to the detection of an item whose image is easy to be identified. In some embodiments, the second detection device 103 may be an XRD detection device, which may determine the composition information of the detected item and is applicable to the detection of dangerous goods with composition information, such as explosives and drugs. It may be understood that the present disclosure is not limited to this, and in other embodiments, two or more grades of item security inspection devices in different forms may be used in combination to improve the accuracy of item security inspection.

The item security inspection system 100 shown in FIG. 1A and FIG. 1B includes the first detection device 101, the first determination device 102 arranged on a downstream side of the first detection device 101, the second detection device 103 arranged on a downstream side of the first determination device 102, the second determination device 104 arranged on a downstream side of the second detection device 103, the manual security inspection section 105, and the baggage retrieval region 106 which is optionally provided. FIG. 1A shows a diagram of connection relationships between the various devices, components and regions. After detecting an item, the first detection device 101 generates the first detection result. When the first determination result generated by the first determination device 102 based on the first detection result is a first safe result, the item is transferred to the baggage retrieval region. When the first determination result generated by the first determination device 102 based on the first detection result is a dangerous result, the item is transferred to the manual security inspection section 105 for manual security inspection. When the first determination result generated by the first determination device 102 based on the first detection result is a suspected dangerous result or an undetermined result, the item is moved to the second detection device 103 for a secondary detection. When a second determination result generated by the second determination device 104 based on the second detection result of the second detection device 103 is a second safe result, the item is transferred to the baggage retrieval region 106. When the second determination result generated by the second determination device 104 based on the second detection result of the second detection device 103 is a second non-safe result, the item is transferred to the manual security inspection section 105 for manual security inspection. That is, as long as the second determination result is a second non-safe result, the manual security inspection is required for the item. FIG. 1B schematically shows a structural mounting diagram for various devices, components and regions of the item security inspection system 100. As shown in FIG. 1B, in the actual arrangement, for example, a manual security inspection section 105 is provided on the downstream side of each of the first determination device 102 and the downstream side of the second determination device 104, so as to improve the security inspection efficiency of an item of which the first determination result is the first non-safe result and an item of which the second determination result is the second non-safe result. By arranging the devices, components and regions of the item security inspection system based on the positional relationship shown in FIG. 1B, the space utilization rate of the item security inspection system may be effectively improved, and the space occupancy rate of the item security inspection system may be effectively reduced while ensuring the security inspection efficiency.

FIG. 2A and FIG. 2B show the item security inspection system 200. FIG. 2A shows a diagram of connection relationships between various devices, components and regions of the item security inspection system 200. In the item security inspection system 200 shown in FIG. 2A, a plurality of first detection devices 101 are provided, a first determination device 102 corresponding to each first detection device 101 is provided on the downstream side of this first detection device 101. Each first determination device 102 generates a first determination result based on the first detection result generated by the first detection device 101. A second detection device 103 is provided on the downstream side of the first determination device 102, and the second detection device 103 is used to detect an item of which the first determination result is the first non-safe result and generate a second detection result. The second determination device 104 generates a second determination result based on the second detection result. When the second determination result is a second safe result, the item is transferred to the baggage retrieval region 106. If the second determination result is a second non-safe result, the item is transferred to the manual security inspection section 105. According to this embodiment, the first detection result generated by the first detection device 101 may determine an image of the item, and the first determination result may be generated from the determined image of the item. For example, if the determined image of the item contains prohibited animals, plants, knives, guns, etc., the generated first determination result is a dangerous result. According to this embodiment, the item security inspection system 200 is applicable to a scenario where whether an item is safe may be accurately determined based on the image of the item, thereby reducing the number of items entering the second detection device 103 and the manual security inspection section 106, so that the security inspection efficiency may be effectively improved. FIG. 2B schematically shows a structural mounting diagram of various devices, components and regions of the item security inspection system 200. As shown in FIG. 2B, in the actual arrangement, for example, a plurality of first detection devices 101 are provided, a common second detection device 103 is provided on the downstream sides of a plurality of first determination devices 102, a baggage retrieval region 106 is provided on a downstream side of each first determination device 102. The downstream side of the second determination device 104 is connected to each baggage retrieval region 106, so that the item of which the second determination result is the second safe result of the second determination device is transferred to the baggage retrieval region 106. By arranging the devices, components and regions of the item security inspection system based on the positional relationship shown in FIG. 2B, item inspection of an item whose safety is determined through images may be realized.. In addition, the space utilization rate of the item security inspection system may be effectively improved, and the space occupancy rate of the item security inspection system may be effectively reduced while ensuring the security inspection efficiency.

FIG. 3A and FIG. 3B show the item security inspection system 300. FIG. 3A shows a diagram of connection relationships between various devices, components and regions of the item security inspection system 300. In the item security inspection system 300 shown in FIG. 3A, a first detection device 101 is provided, a first determination device 102 corresponding to the first detection device 101 is provided on the downstream side of the first detection device 101, a plurality of second detection devices 103 are provided on the downstream side of the first determination device 102, second determination devices 104 respectively corresponding to the second detection devices 103 are provided on the downstream side of the second detection devices 103, a manual security inspection section 105 is provided, and a baggage retrieval region 106 may be optionally provided. In the present embodiment, by arranging the plurality of second detection devices 103 and the second determination devices corresponding to the second detection devices 103, the system is applicable to a scenario where it is unable to accurately determine whether an item is safe based on the image of the item. For example, if the first determination result generated based on the first detection result of the first detection device 101 is a non-safe result, the composition information contained in the item may be detected by conveying the item to the second detection device for further detection, so as to further determine the second determination result of the item. FIG. 3B schematically shows a structural mounting diagram for various devices, components and regions of the item security inspection system 300. As shown in FIG. 3B, in the actual arrangement, for example, a plurality of second detection devices 103 and a baggage retrieval region 106 are arranged on the downstream side of the first determination device 102. When the first determination result is a first non-safe result, the item is conveyed to the plurality of second detection devices 103 for a secondary detection. When the second determination result by the second determination device 104 is a second non-safe result, the item is conveyed to the manual security inspection section 105 for manual security inspection, otherwise, the item is conveyed to the baggage retrieval region 106. In this embodiment, when it is unable to determine whether the item is safe through the image of the item in the scenario, a plurality of second detection devices are provided to further detect the item, for example, to detect the composition information contained in the item. In this way, it is possible to efficiently and accurately detect the scenario of sensitive components, so that the number of items entering the manual security inspection section 105 may be reduced, and the security inspection efficiency may be effectively improved.

In some embodiments of the present disclosure, the number of the first detection devices 101 and the number of the second detection devices 103 may be adjusted based on actual application scenarios. For example, one first detection device 101 and one second detection device 103 are provided. When it is possible to accurately determine whether an item is safe through the image of the item in the scenario, a plurality of first detection devices 101 may be provided, so that it may be determined whether more than one item is safe after they passes through the first detection devices. The second detection device and the second determination device are used to detect and determine an item of which the first determination result is the first non-safe result. For another example, when the image of an item is insufficient or makes it difficult to determine whether the item is safe in the scenario, a plurality of second detection devices 103 may be provided. When there are many items of which first determination results are the first non-safe results generated after passing through the first detection device and the first determination device, the items with the first non-safe results are conveyed to the plurality of second detection devices 103, so that it is possible to improve the speed of performing secondary detection on the items. According to the embodiments of the present disclosure, the security inspection efficiency of the item security inspection system for different types of items may be effectively improved by adjusting the number of the first detection device(s) and the number of the second detection device(s).

In some embodiments of the present disclosure, for the item security inspection system 100 shown in FIG. 1A and FIG. 1B, the first non-safe result includes a suspected dangerous result, a dangerous result and an undetermined result. The second detection device 103 is further configured to detect an item of which the first determination result is either a suspected dangerous result or an undetermined result, so as to generate a second detection result. Moreover, the manual security inspection section 105 is further configured to perform the manual security inspection on an item of which the first determination result is the dangerous result.

When the first determination result is a dangerous result, it may be determined that there the detected item is dangerous, the manual security inspection section 105 performs manual security inspection on the item of which the first determination result is the dangerous result. This may effectively reduce the security inspection steps and improve the security inspection efficiency. When the first determination result is a suspected dangerous result or an undetermined result, it means that it is unable to accurately determine whether the item is dangerous or it is unable to determine the safety of the item. The second detection device detects the item to generate a second detection result. As such, the safety of the item may be further determined, and the number of items on which manual inspection is performed by the manual security inspection section may be effectively reduced. Meanwhile, by generating the second detection result, the safety of the item may be more accurately determined, and the efficiency and accuracy of security inspection may be improved.

In some embodiments of the present disclosure, for the item security inspection systems 200 and 300 shown in FIG. 2A, FIG. 2B, FIG. 3A and FIG. 3B, the first non-safe result includes a suspected dangerous result, a dangerous result and an undetermined result, and the second detection device 103 is further configured to detect an item of which the first determination result is any one of the suspected dangerous result, the dangerous result and the undetermined result, so as to generate the second detection result.

In some embodiments of the present disclosure, the second detection device 103 detects an item with the first non-safe result (including the suspected dangerous result, the dangerous result and the undetermined result, for example) generated by the first determination device 102, so that a secondary detection may be performed on each of the items with the first non-safe result, and the accuracy of item security inspection may be improved.

In some embodiments of the present disclosure, the second determination device 104 may be configured to generate a second determination result based on both the first detection result and the second detection result, which may improve the accuracy of the generated second determination result.

In an optional embodiment, the second determination device may generate the second determination result based on only the second detection result.

The first determination device 102 is configured to determine a first composition information indicating a composition of the item based on the first detection result, and generate a first determination result based on at least the first composition information.

Exemplarily, the first detection result includes X-ray transmission data. Based on the X-ray transmission data, an image of the item may be generated, and a composition analysis may further be performed on the item. For example, based on an energy spectrum curve of the X-ray transmission data in the first detection result, the first composition information of the item is determined. The first determination result may be generated based on the first composition information. For example, when the first composition information of an item is determined to be dangerous components information, such as explosives, and there is no non-dangerous composition information similar to this first composition information, the first determination result is generated based on the first composition information.

In other embodiments, the first determination result may be jointly generated based on information other than the first composition information.

In some embodiments of the present disclosure, the first determination device is further configured to determine an image of the item based on the first detection result, and generate a first determination result based on both the first composition information and the image.

In the embodiments of the present disclosure, since some substances in life have similar atomic numbers and electron densities, in the process of analyzing the composition of an item based on the X-ray transmission data in the first detection result, components with similar atomic numbers may be unable to be effectively distinguished, or misidentification of composition may occur, which may cause the generated first determination result to be the suspected dangerous result or the undetermined result. That is, there may be dangerous composition information in the item, or it is unable to determine whether there is dangerous composition information in the item.

In this embodiment, the image of the item that is determined based on the first detection result, and the first determination result is generated jointly based on the first composition information and the image of the item, so that the influence brought by other similar components may be eliminated, thereby improving the accuracy of the generated first determination result.

In some embodiments of the present disclosure, the second determination device is configured to determine a second composition information indicating the composition of the item based on the second detection result, and generate a second determination result based on at least the second composition information.

In the present embodiment, the second detection result includes X-ray diffraction data. A diffraction pattern of the item composition is generated based on the X-ray diffraction data, and the second composition information indicating the item composition may be determined based on the diffraction pattern. When the specific content of the second composition information of the item can be determined, the second determination result may be generated based on the second composition information. When the specific content of the second composition information of the item can not be determined, the second determination result may be generated jointly based on the second composition information and other information, so as to improve the accuracy of the generated second determination result.

In some embodiments of the present disclosure, the second determination device is configured to generate a second determination result based on a comparison result between the first composition information determined based on the first detection result and the second composition information.

Exemplarily, the first composition information of the item is determined based on the first detection result when the item passes through the first detection device. When the item continues to pass through the second detection device, the second composition information of the item is determined based on the second detection result. The second determination device compares the first composition information and the second composition information of the item to generate a determination result.

If the comparison result shows that the first composition information is identical to the second composition information and the second composition information indicates a presence of dangerous components, a dangerous result is generated. For example, if the second composition information is an explosive composition, and the first composition information is identical to the second composition information, the dangerous result is generated.

If the comparison result shows that the first composition information is different from the second composition information and the second composition information indicates a presence of dangerous components, a suspected dangerous result or an undetermined result is generated. For example, if the first composition information is a non-explosive composition and the second composition information is an explosive composition, a suspected dangerous result or an undetermined result is generated. This is convenient for the manual security inspection section to take accurate countermeasures based on the generated second determination result.

If the comparison result shows that the first composition information is different from the second composition information and the second composition information indicates a presence of a safe composition, a second safe result is generated. For example, the first composition information is an explosive composition and the second composition information is a non-explosive composition. Since the first detection result generated by the first detection device contains X-ray transmission data, the composition information generated based on the X-ray transmission data has a certain probability of misdetermination. The composition information of the item determined based on the X-ray diffraction data in the second detection result generated by the second detection device may be more accurate than that determined based on the X-ray transmission data. When the second composition information indicates a safe composition, a second safe result is generated.

In some embodiments of the present disclosure, the item security inspection system shown in FIG. 1A to FIG. 3B further includes: a first diversion device 107 configured to selectively divert the item to the second detection device 103, the manual security inspection section 105, or the baggage retrieval region 106 based on the first determination result; and a second diversion device 108 configured to selectively divert the item to the manual security inspection section 105 or the baggage retrieval region 106 based on the second determination result.

Exemplarily, when the first determination result of the item is the first safe result, the first diversion device diverts the item to the baggage retrieval region. When the first determination result of the item is a first non-safe result, it diverts the item to the manual security inspection section or the second detection device. For example, if the first determination result is a dangerous result, the item is diverted to the manual security inspection section, and if the first determination result is an undetermined result, the item is diverted to the second detection device.

Exemplarily, when the second determination result of the item is the second safe result, the second diversion device diverts the item to the baggage retrieval region. When the second determination result of the item is the second non-safe result, it diverts the item to the manual security inspection section.

For example, the first diversion device 107 and the second diversion device 108 may include conveyor belts with a diversion function, a gate, a revolving door, etc., or other devices that may selectively divert an item based on the determination result.

In some embodiments of the present disclosure, the item security inspection system shown in FIG. 1A to FIG. 3B further includes a conveying device 109 configured to at least selectively convey the item through the first detection device 101 and the second detection device 102. For example, the conveying device 109 may be a conveyor belt arranged between the first detection device and the second detection device, or between the first detection device, the second detection device, the baggage retrieval region and the manual security inspection section, so as to convey the item in a controlled manner.

According to the embodiments of the present disclosure, at least one first detection device and one first determination device are provided to detect the item and generate the first determination result, so that the safety of the item may be effectively analyzed, and the safety of the item may be determined through the image of the item. At least one second detection device and one second determination device are provided to realize the secondary detection performed on an item of which the determination result is the first non-safe result, so that the accuracy of item detection may be improved, the misdetermination rate may be reduced, the number of items for manual security inspection may be reduced, thereby effectively improving the security inspection efficiency.

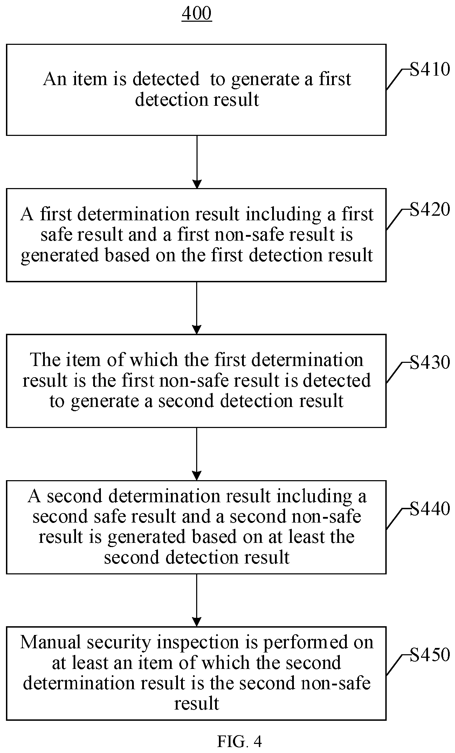

The embodiments of the present disclosure further provide an item security inspection method. The item security inspection method of the embodiments of the present disclosure will be repeated below with reference to FIG. 4 to FIG. 10.

FIG. 4 schematically shows a flowchart of an item security inspection method according to the embodiments of the present disclosure.

As shown in FIG. 4, the flow 400 of the item security inspection method includes operations S410 to S450.

In operation S410, an item is detected to generate a first detection result. For example, operation S410 may be performed by the first detection device described above, which will not be repeated here.

In operation S420, a first determination result is generated based on the first detection result, where the first determination result includes a first safe result and a first non-safe result. For example, operation S420 may be performed by the first determination device described above, which will not be repeated here.

In operation S430, the item of which the first determination result is the first non-safe result is detected to generated a second detection result. For example, operation S430 may be performed by the second detection device described above, which will not be repeated here.

In operation S440, a second determination result including a second safe result and a second non-safe result is generated based on at least the second detection result. For example, operation S440 may be performed by the second detection device described above, which will not be repeated here.

In operation S450, manual security inspection is performed on at least an item of which the second determination result is the second non-safe result. For example, operation S450 may be performed by the manual security inspection section described above, which will not be repeated here.

According to the item security inspection method in the embodiments of the present disclosure, the first detection result is generated by detecting the item, and the first determination result is generated based on the first detection result, so that the safety of the item may be effectively analyzed. By detecting the item of which the first determination result is the first non-safe result to generate the second detection result, it is possible to effectively improve the accuracy of item detection. The second detection device is provided such that manual security inspection is performed on the item of which the second determination result is the second non-safe result, so that the number of items of which the manual security inspection is performed may be effectively reduced and the efficiency of the security inspection may be improved.

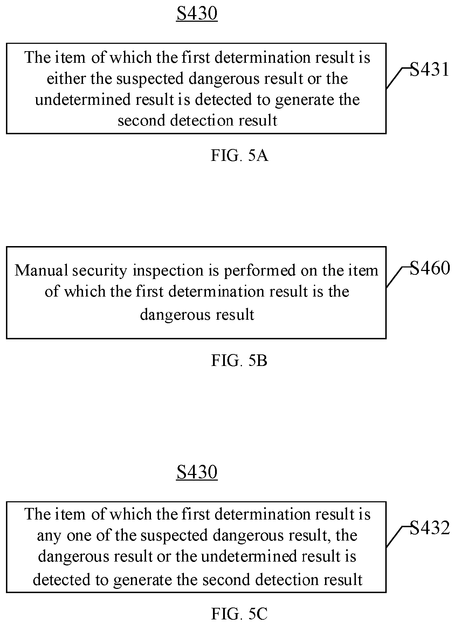

FIG. 5A schematically shows a flowchart of operation S430 in an item security inspection method according to an embodiment of the present disclosure. FIG. 5B schematically shows a flowchart of an item security inspection method based on another embodiment of the present disclosure. FIG. 5C schematically shows a flowchart of operation S430 in an item security inspection method according to another embodiment of the present disclosure.

As shown in FIG. 5A, operation S430 may include operation S431, where the item of which the first determination result is either the suspected dangerous result or the undetermined result is detected to generate the second detection result.

In the embodiments of the present disclosure, as shown in FIG. 5B, the flow 400 of the item security inspection method further includes operation S460, where manual security inspection is performed on the item of which the first determination result is the dangerous result. Exemplarily, operation S460 may be performed after operation S420.

For example, when the first determination result is the suspected dangerous result or the undetermined result, the item is detected to generate the second detection result, and when the first determination result is the dangerous result, the manual security inspection is performed on the item.

In another embodiment of the present disclosure, as shown in FIG. 5C, operation S430 may include operation S432, where the item of which the first determination result is any one of the suspected dangerous result, the dangerous result or the undetermined result is detected to generate the second detection result. This operation may be performed by the second detection device, which will not be repeated here.

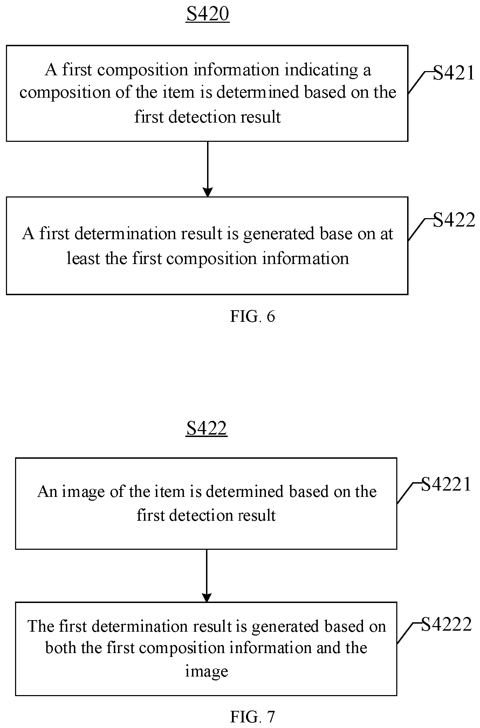

FIG. 6 schematically shows a flowchart of operation S420 in an item security inspection method according to an embodiment of the present disclosure.

As shown in FIG. 6, operation S420 may include operation S421 to operation S422.

In operation S421, a first composition information indicating a composition of the item is determined based on the first detection result.

In operation S422, the first determination result is generated based on at least the first composition information. For example, the first determination result is generated based on only the first composition information, or based on the first composition information and other information (such as an image of the item described below).

FIG. 7 schematically shows a flowchart of operation S422 in an item security inspection method according to tan embodiment of the present disclosure.

As shown in FIG. 7, operation S422 includes operation S4221 to operation S4222.

In operation S4221, an image of the item is determined based on the first detection result.

In operation S4222, the first determination result is generated based on both the first composition information and the image.

In some exemplary embodiments of the present disclosure, generating the second determination result based on at least the second detection result includes: generating the second determination result based on the first detection result and the second detection result. Exemplarily, the second determination result is generated based on the first composition information in the first detection result and the second composition information in the second detection result.

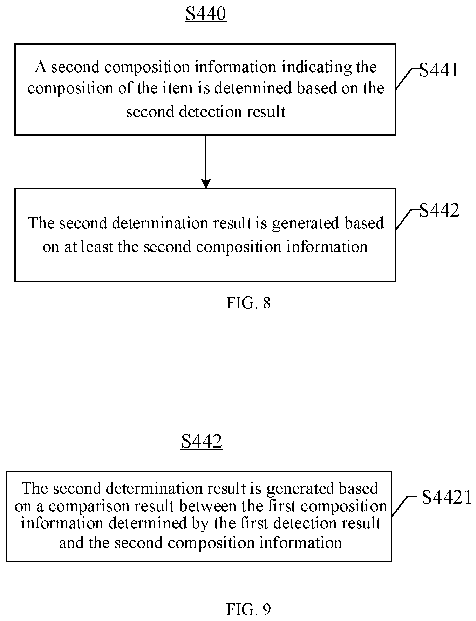

FIG. 8 schematically shows a flowchart of operation S440 in an item security inspection method according to an embodiment of the present disclosure.

As shown in FIG. 8, in some embodiments of the present disclosure, operation S440 of generating the second determination result based on at least the second detection result includes operation S441 to operation S442.

In operation S441, a second composition information indicating the composition of the item is determined based on the second detection result.

In operation S442, the second determination result is generated based on at least the second composition information.

FIG. 9 schematically shows a flowchart of operation S442 in an item security inspection method according to an embodiment of the present disclosure.

As shown in FIG. 9, operation S442 includes operation S4221.

In operation S4221, the second determination result is generated based on a comparison result between the first composition information that is determined based on the first detection result and the second composition information.

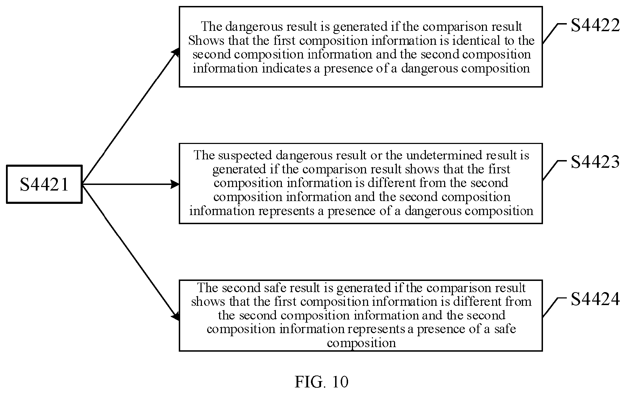

FIG. 10 schematically shows a flowchart of operation S4421 in an item security inspection method according to an embodiment of the present disclosure.

Operation S4221 includes operation S4222 to operation S4224.

In operation S4222, the dangerous result is generated if the comparison result shows that the first composition information is identical to the second composition information and the second composition information indicates a presence of dangerous components.

In operation S4223, the suspected dangerous result or an undetermined result is generated if the comparison result shows that the first composition information is different from the second composition information and the second composition information indicates a presence of dangerous components.

In operation S4224, the second safe result is generated if the comparison result shows that the first composition information is different from the second composition information and the second composition information indicates a presence of a safe composition.

Operation S4222 to operation S4224 exclude each other and only one of them is performed.

In some exemplary embodiments of the present disclosure, the item security inspection method further includes: conveying the item to the baggage retrieval region when the first detection result and the second detection result are safe results.

In some exemplary embodiments of the present disclosure, the item security inspection method further includes: selectively diverting the item to the second detection device, a manual security inspection section for performing the manual security inspection or the baggage retrieval region based on the first determination result; and selectively diverting the item to the manual security inspection section or the baggage retrieval region based on the second determination result.

Exemplarily, when the first determination result is the non-safe result, the item is selectively diverted to the manual security inspection section or the second detection device. When the first determination result is the safe result, the item is selectively diverted to the baggage retrieval region.

Exemplarily, when the second determination result is the non-safe result, the item is selectively diverted to the manual security inspection section. When the second determination result is the safe result, the item is selectively diverted to the baggage retrieval region.

In some exemplary embodiments of the present disclosure, the item security inspection method further includes: at least selectively conveying the item through the first detection device and the second detection device by the conveying device, so as to generate the first detection result and the second detection result.

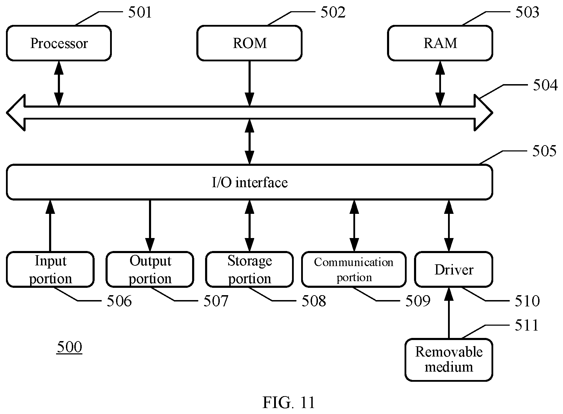

FIG. 11 schematically shows a block diagram of an electronic device applicable for realizing part of operations of an item security inspection method according to an embodiment of the present disclosure. The electronic device shown in FIG. 11 is only an example, and should not impose any limitation to the function and application scope of the embodiments of the present disclosure.

As shown in FIG. 11, an electronic device 500 according to the embodiments of the present disclosure includes a processor 501, which may perform various appropriate operations and processing based on a program stored in a read-only memory (ROM) 502 or a program loaded into a random access memory (RAM) 503 from a storage portion 508. The processor 501 may include, for example, a general-purpose microprocessor (such as a CPU), an instruction set processor and/or a related chipset and/or a special-purpose microprocessor (such as an applicationspecific integrated circuit (ASIC)) and the like. The processor 501 may also include an on-board memory for caching purposes. The processor 501 may include a single processing unit or a plurality of processing units for performing some of different operations or actions of the method flow according to the embodiments of the present disclosure.

In the RAM 503, various programs and data required for the operation of the electronic device 500 are stored. The processor 501, the ROM 502 and the RAM 503 are connected to one another through a bus 504. The processor 501 executes various operations based on the method flow of the embodiments of the present disclosure by executing programs in the ROM 502 and/or the RAM 503. It should be noted that the program may also be stored in one or more memories other than the ROM 502 and the RAM 503. The processor 801 may also execute a part of various operations or steps (such as analysis and determination of detection results) of the method flow according to the embodiments of the present disclosure by executing programs stored in the one or more memories.

According to the embodiments of the present disclosure, the electronic device 500 may further include an input/output (I/O) interface 505, which is also connected to the bus 504. The electronic device 500 may further include one or more of the following components connected to the I/O interface 505: an input portion 506 including a keyboard, a mouse, etc.; an output portion 507 including, for example, a cathode ray tube (CRT), a liquid crystal display (LCD), a speaker, etc.; a storage portion 508 including a hard disk or the like; and a communication portion 509 including a network interface card such as a LAN card and a modem. The communication portion 509 performs communication processing via a network such as the Internet. A driver 510 is also connected to the I/O interface 505 as needed. A removable medium 511, such as a magnetic disk, an optical disk, a magneto-optical disk or a semiconductor memory, is installed on the drive 510 as needed, so that a computer program read from it may be installed into the storage portion 508 as needed.

The present disclosure further provides a computer-readable storage medium. The computer-readable storage medium may be included in the apparatus/device/system described in the above embodiments; or it may also exist alone without being assembled into the apparatus/device/system. The computer-readable storage medium carries one or more programs which, when executed, implement part of the steps or operations of the method according to the embodiments of the present disclosure.

According to the embodiments of the present disclosure, the computer-readable storage medium may be a nonvolatile computer-readable storage medium, which may include, for example, but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, a computer-readable storage medium may be any tangible medium containing or storing a program, which may be used by or in combination with an instruction execution system, apparatus or device. For example, according to the embodiments of the present disclosure, the computer-readable storage medium may include one or more memories other than the ROM 502 and/or the RAM 503 and/or the ROM 502 and the RAM 503 described above.

The embodiments of the present disclosure further include a computer program product including a computer program containing program codes for performing a part of the steps or operations of the method shown in the flowchart. When the computer program product runs in a computer system, the program codes are used to cause the computer system to implement a part of the steps or operations of the method provided by the embodiments of the present disclosure.

When the computer program is executed by the processor 501, the above functions defined in the system/device of the embodiments of the present disclosure are performed. According to the embodiments of the present disclosure, the system, device, module, units, etc. described above may be implemented by computer program modules.

In one embodiment, the computer program may rely on a tangible storage medium such as an optical storage device and a magnetic storage device. In another embodiment, the computer program may also be transmitted and distributed in the form of signals on the network medium, downloaded and installed through the communication portion 509, and/or installed from the removable medium 511. The program codes contained in the computer program may be transmitted by any suitable network medium, including but not limited to: a wireless network medium, a wired network medium, etc., or any suitable combination of the above.

In such an embodiment, the computer program may be downloaded and installed from the network through the communication portion 509 and/or installed from the removable medium 511. When the computer program is executed by the processor 501, the above functions defined in the system of the embodiments of the present disclosure are performed. According to the embodiments of the present disclosure, the system, apparatus, device, module, unit, etc. described above may be implemented by computer program modules.

According to the embodiments of the present disclosure, program codes for executing the computer program provided by the embodiments of the present disclosure may be written in any combination of one or more programming languages. Specifically, these calculation programs may be implemented by using high-level procedural and/or object-oriented programming languages and/or assembly/machine languages. The programming languages include but are not limited to Java, C++, python, "C" language or similar programming languages. The program codes may be completely executed on a user computing device, partially executed on a user device, partially executed on a remote computing device, or completely executed on a remote computing device or server. In the case involving a remote computing device, the remote computing device may be connected to a user computing device through any kind of network, including a local area network (LAN) or a wide area network (WAN), or may be connected to an external computing device (for example, through the Internet using an Internet service provider).

The flowcharts and block diagrams in the drawings illustrate the architecture, functions and operations of possible implementations of the system, method and computer program product based on various embodiments of the present disclosure. In this regard, each block in the flowchart or block diagram may indicate a module, a program segment, or a part of code, which contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in a reverse order, depending on the functions involved. It should also be noted that each block in the block diagram or flowchart, and combinations of blocks in the block diagram or flowchart, may be implemented by a dedicated hardware-based system that performs specified functions or operations, or may be implemented by a combination of dedicated hardware and computer instructions.

It may be understood by those skilled in the art that the features recited in various embodiments and/or claims of the present disclosure may be in combination and/or conjunction in various ways, even if such combinations or conjunctions are not explicitly recited in the present disclosure. In particular, the features recited in various embodiments and/or claims of the present disclosure may be in combination and/or conjunction in various ways without departing from the spirit and teaching of the present disclosure. All these combinations and/or conjunctions are within the scope of the present disclosure.

The embodiments of the present disclosure are described above. However, these embodiments are only for the purpose of illustration, and are not intended to limit the scope of the present disclosure. Although each embodiment is described separately above, this does not mean that measures in each embodiment may not be advantageously used in combination. The scope of the present disclosure is defined by the appended claims and the equivalents thereof. Without departing from the scope of the present disclosure, various substitutions and modifications may be made by those skilled in the art, and these substitutions and modifications should all fall within the scope of the present disclosure.

## Claims

1. An item security inspection system, comprising:
at least one first detection device configured to detect an item and generate a first detection result;
a first determination device configured to generate a first determination result comprising a first safe result and a first non-safe result based on the first detection result;
at least one second detection device configured to detect an item of which the first determination result is the first non-safe result and generate a second detection result;
a second determination device configured to generate a second determination result comprising a second safe result and a second non-safe result based on at least the second detection result; and
a manual security inspection section configured to perform manual security inspection on at least an item of which the second determination result is the second non-safe result.

2. The item security inspection system according to claim 1, wherein the first non-safe result comprises a suspected dangerous result, a dangerous result and an undetermined result,
the second detection device is further configured to detect an item of which the first determination result is either the suspected dangerous result or the undetermined result, so as to generate the second detection result, and
the manual security inspection section is further configured to perform manual security inspection on an item of which the first determination result is the dangerous result.

3. The item security inspection system according to claim **1,** wherein the first non-safe result comprises a suspected dangerous result, a dangerous result and an undetermined result, and
the second detection device is further configured to detect an item of which the first determination result is any one of the suspected dangerous result, the dangerous result or the undetermined result, so as to generate the second detection result.

4. The item security inspection system according to claim **1,** wherein the second non-safe result comprises a dangerous result, a suspected dangerous result and an undetermined result.

5. The item security inspection system according to any one of claims 1 to 4, wherein the second determination device is further configured to generate the second determination result based on the first detection result and the second detection result.

6. The item security inspection system according to any one of claims 1 to 4, wherein the first determination device is configured to:
determine a first composition information indicating a composition of the item based on the first detection result; and
generate the first determination result based on at least the first composition information.

7. The item security inspection system according to claim 6, wherein the first determination device is further configured to:
determine an image of the item based on the first detection result; and
generate the first determination result based on both the first composition information and the image.

8. The item security inspection system according to claim 6, wherein the second determination device is configured to:
determine a second composition information indicating the composition of the item based on the second detection result; and
generate the second determination result based on at least the second composition information.

9. The item security inspection system according to claim 8, wherein the second determination device is further configured to:
generate the second determination result based on a comparison result between the first composition information determined based on the first detection result and the second composition information.

10. The item security inspection system according to claim 9, wherein the second determination device is further configured to:
generate a dangerous result if the comparison result shows that the first composition information is identical to the second composition information and the second composition information indicates a presence of dangerous components;
generate a suspected dangerous result or an undetermined result if the comparison result shows that the first composition information is different from the second composition information and the second composition information indicates a presence of dangerous components; and
generate the second safe result if the comparison result shows that the first composition information is different from the second composition information and the second composition information indicates a presence of a safe composition.

11. The item security inspection system according to any one of claims 1 to 4 and claims 7 to 10,
wherein the first detection result comprises X-ray transmission data of the item; and
wherein the second detection result comprises X-ray diffraction data of the item.

12. The item security inspection system according to claim 11, wherein the first detection device comprises a CT detection device and the second detection device comprises an XRD detection device.

13. The item security inspection system according to any one of claims 1 to 4, claims 7 to 10 and claim 12, further comprising: a baggage retrieval region arranged on a downstream side of the first determination device and/or the second determination device, wherein the item is transferred to the baggage retrieval region when the first determination result of the item or the second determination result of the item is a safe result.

14. The item security inspection system according to claim 13, further comprising:
a first diversion device configured to selectively divert the item to the second detection device, the manual security inspection section or the baggage retrieval region based on the first determination result; and
a second diversion device configured to selectively divert the item to the manual security inspection section or the baggage retrieval region based on the second determination result.

15. The item security inspection system according to any one of claims 1 to 4, claims 7 to 10, claim 12 and claim 14, wherein the manual security inspection section is arranged on a downstream side of the first determination device and/or a downstream side of the second determination device.

16. The item security inspection system according to any one of claims 1 to 4, claims 7 to 10, claim 12 and claim 14, wherein the first determination device is arranged on a downstream side of the at least one first detection device, the at least one second detection device is arranged on a downstream side of the first determination device, and the second determination device is arranged on a downstream side of the second detection device.

17. The item security inspection system according to any one of claims 1 to 4, claims 7 to 10, claim 12 and claim 14, further comprising a conveying device configured to at least selectively convey the item through the first detection device and the second detection device.

18. An item security inspection method, comprising:
detecting, by a first detection device, an item to generate a first detection result;
generating a first determination result comprising a first safe result and a first non-safe result based on the first detection result;
detecting, by a second detection device, an item of which the first determination result is the first non-safe result to generate a second detection result;
generating a second determination result comprising a second safe result and a second non-safe result based on at least the second detection result; and
performing manual security inspection on at least an item of which the second determination result is the second non-safe result.

19. The item security inspection method according to claim 18, wherein the first non-safe result comprises a suspected dangerous result, a dangerous result and an undetermined result,
wherein detecting the item of which the first determination result as the first non-safe result to generate the second detection result comprises: detecting an item of which the first determination result is either the suspected dangerous result or the undetermined result to generate the second detection result, and
the item security inspection method further comprises performing manual security inspection on an item of which the first determination result is the dangerous result.

20. The item security inspection method according to claim 18, wherein the first non-safe result comprises a suspected dangerous result, a dangerous result and an undetermined result,
wherein detecting the item of which the first determination result is the first non-safe result to generate the second detection result comprises: detecting an item of which the first determination result is any one of the suspected dangerous result, the dangerous result or the undetermined result, so as to generate the second detection result.

21. The item security inspection system according to claim 18, wherein the second non-safe result comprises a dangerous result, a suspected dangerous result and an undetermined result.

22. The item security inspection method according to any one of claims 18 to 21, wherein generating the second determination result based on at least the second detection result comprises:
generating the second determination result based on the first detection result and the second detection result.

23. The item security inspection method according to any one of claims 18 to 21, wherein generating the first determination result based on the first detection result comprises:
determining a first composition information indicating a composition of the item based on the first detection result; and
generating the first determination result based on at least the first composition information.

24. The item security inspection method according to claim 23, wherein generating the first determination result based on at least the first composition information comprises:
determining an image of the item based on the first detection result; and
generating the first determination result based on both the first composition information and the image.

25. The item security inspection method according to claim 23, wherein generating the second determination result based on at least the second detection result comprises:
determining a second composition information indicating the composition of the item based on the second detection result; and
generating the second determination result based on at least the second composition information.

26. The item security inspection method according to claim 25, wherein generating the second determination result based on at least the second composition information comprises:
generating the second determination result based on a comparison result between the first composition information determined based on the first detection result and the second composition information.

27. The item security inspection method according to claim 26, wherein generating the second determination result based on the comparison result between the first composition information determined based on the first detection result and the second composition information comprises:
generating the dangerous result if the comparison result shows that the first composition information is identical to the second composition information and the second composition information indicates a presence of dangerous components;
generating the suspected dangerous result or an undetermined result if the comparison result shows that the first composition information is different from the second composition information and the second composition information indicates a presence of dangerous components; and
generating the second safe result if the comparison result shows that the first composition information is different from the second composition information and the second composition information indicates a presence of a safe composition.

28. The item security inspection method according to any one of claims 18 to 21 and claims 24 to 27,
wherein the first detection result comprises X-ray transmission data of the item; and
wherein the second detection result comprises X-ray diffraction data of the item.

29. The item security inspection method according to any one of claims 18 to 21 and claims 24 to 27, further comprising: conveying the item to a baggage retrieval region when the first determination result or the second determination result is a safe result.

30. The item security inspection method according to claim 29, further comprising:
selectively diverting the item to the second detection device, a manual security inspection section for performing manual security inspection or the baggage retrieval region based on the first determination result; and
selectively diverting the item to the manual security inspection section or the baggage retrieval region based on the second determination result.

31. The item security inspection method according to any one of claims 18 to 21, claims 24 to 27 and claim 30, further comprising: at least selectively conveying, by a conveying device, the item through the first detection device and the second detection device.
